# EUROPEAN PATENT APPLICATION

(11) **EP 0 709 301 A2**
(43) Date of publication of application: **01.05.1996**
(21) Application number: 95307713.8
(22) Date of filing: 30.10.1995
(51) Int. Cl.: B65D 47/24

(54) **Tamper indicating resealable closure for a container**

(30) Priority: 31.10.1994 US 332140
(71) Applicant: Meyer, Uwe F., Islington, Ontario M9B 5C8 (CA); Sander, Dieter, Mississauga, Ontario L4Z 1P3 (CA)
(72) Inventor: Meyer, Uwe F., Islington, Ontario M9B 5C8 (CA); Sander, Dieter, Mississauga, Ontario L4Z 1P3 (CA)
(74) Representative: Feakins, Graham Allan

(57) **Abstract**

A dual tamper indicating closure with resealable pour spout (20) for use on plastics bottles and the like. The closure has a first annular indicating ring (15) engageable on a portion of a bottle neck secured to the closure by a plurality of frangible elements (14) thereabout. A second annular tamper indicating ring (30) is engageable on a secondary top cap (25) on the pour spout (20). The top cap (25) has an opening (27) within that selectively registers with a plug (23) positioned above an aperture (22) in the closure from which the pour spout (20) extends. Movement of the top cap (25) on the pour spout separates the indicating ring (30) from the secondary top, thereby allowing access to the pour spout.

## Description

This device relates to tamper indicating closures for containers and the like requiring a push-pull, resealable tamper indicating spout.

Prior art closures of this type may be seen in U.S. Patents 5,104,008, 5,105,967, 4,940,003, 4,801,032, 4,589,561, 4,561,553, 4,500,016, 4,469,253, 3,902,621, 4,084,716, 4,053,007, 4,034,882, 3,980,195, 3,963,139, 3,902,921, 3,682,345 and 3,504,818.

According to the present invention there is provided a tamper indicating resealable closure for a container, the closure having a dual tamper indicating means, including a first tamper indicating ring on the closure which lies, in use, adjacent a neck portion of the bottle and a second tamper indicating ring on a push-pull, resealable pour spout means including a pour spout with an opening therein which is partially closed by a top cap having an opening therein, and there being a plug, supported by means, the plug being in spaced relationship from said pour spout opening to close said top cap opening when said pour spout is pushed to its closed position.

The invention also extends to a container incorporating a closure essentially as just defined.

For a better understanding of the invention and to show how the same may be carried into effect, reference will now be made, by way of example, to the accompanying drawings, in which:-
Figure 1 is a vertical cross-section through part of a resealable bottle cap with a push-pull pour spout in an opened position;
Figure 2 is a vertical cross-section through part of the cap with the push-pull top in a closed position;
Figure 3 is a perspective view of the resealable bottle cap;
Figure 4 is a perspective view of part of the cap;
Figure 5 is a plan view of the cap;
Figure 6 is a side view of the cap; and
Figure 7 is an enlarged cross-sectional view of part of the cap showing the bottle neck configuration.

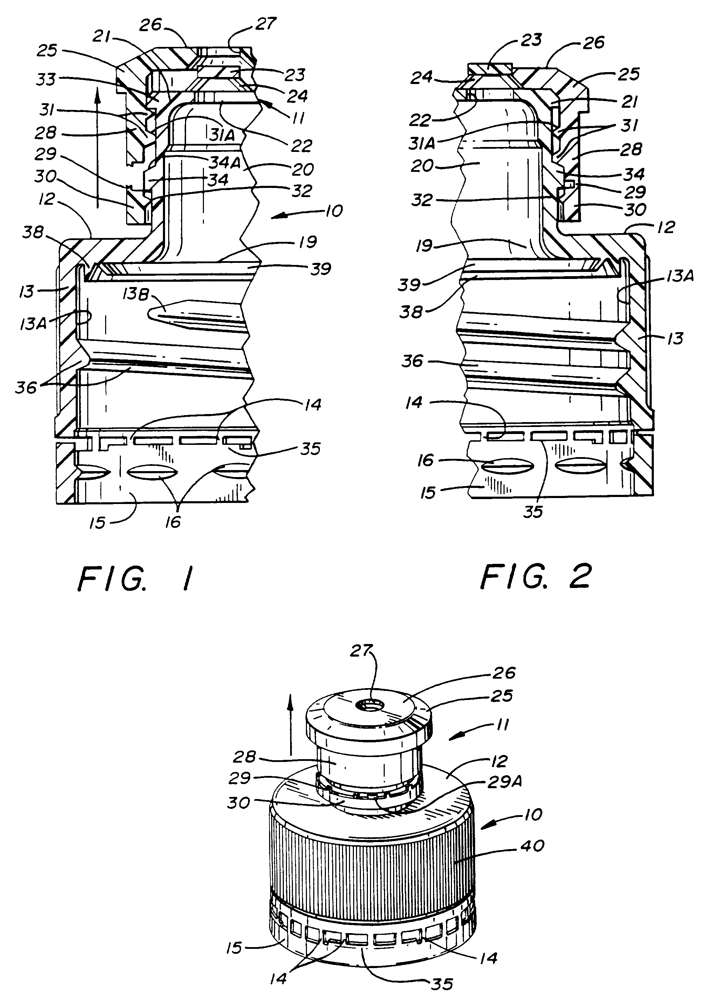

Referring to Figures 1, 2 and 3 of the drawings, a flexible, plastics closure includes a resealable bottle cap 10 with a push-pull secondary closure 11 thereon. The cap 10 includes a top portion 12 with an integral depending annular flange 13 extending therefrom. A plurality of circumferentially-spaced, frangible elements 14 extend from a lower edge of the depending flange 13 to a tamper indicating ring 15 integrally moulded with the closure. The ring 15 is of the same diameter as that of the annular flange 13 of the closure and has a plurality of circumferentially-spaced, inwardly facing arcuate projections 16 thereon.

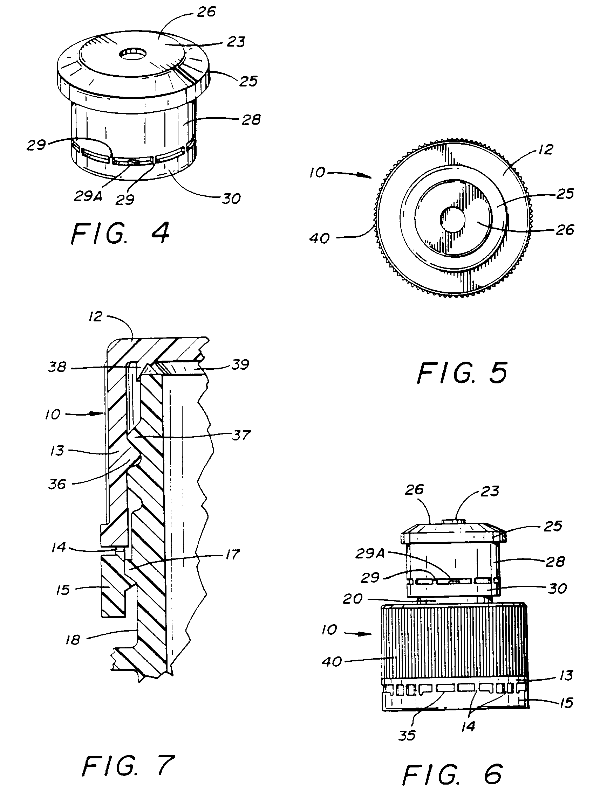

Figures 1 and 7 show that the arcuate projections 16 are circumferentially-spaced about the inner surface of the tamper indicating ring 15 and are positioned so that they are engageable under an annular locking flange 17 on a bottle neck 18 (Figure 7).

An opening 19 is formed in the centre of the top portion 12 of the cap 10 with an upstanding, cylindrical pour spout 20 positioned in registry with the opening 19. The upper end of the pour spout 20 has a secondary top portion 21 thereon which is apertured at 22. A plug 23 is positioned on the secondary top portion 21 in spaced relation to the aperture 22 by a plurality of circumferentially-spaced, angularly arranged, upwardly extending legs 24.

A push-pull top cap 25 is positioned on the upstanding cylindrical pour spout 20 and has an upper portion 26 with a central opening 27 therein which registers with the plug 23 to form a secondary closure when the top cap 25 is in its closed position (Figure 2) and resting on the secondary top portion 21 of the upstanding cylindrical pour spout 20. The top cap 25 has a depending cylindrical body member 28 with a plurality of angularly-spaced, frangible elements 29 connected on its lower perimeter edge to a secondary tamper indicating ring 30. A plurality of upstanding stops 29A are positioned in spaced circumferential arrangement about the tamper indicating ring 30 between the frangible elements 29.

The cylindrical body member 28 has a pair of vertically-spaced, inturned annular flanges 31 having tapered upper and lower surfaces 31A which slideably engage the outer surface of the pour spout 20. The secondary tamper indicating ring 30 also has a tapered internal annular flange 32, which is slideably engaged on the exterior of the pour spout 20. The pour spout 20 has two outwardly extending annular flanges 33 and 34, the flange 34 having a tapered upper portion 34A and lying between the flanges 31 and 32 on the cylindrical body member 28 and secondary tamper indicating band 30, respectively.

In assembled form as illustrated in Figures 2, 3 and 6, the secondary tamper indicating ring 30 is joined by the frangible elements 29 to the cylindrical body member 28 of the top cap 25 and is incapable of moving upwardly due to the interengagement of the inturned flange 32 with the outwardly extending flange 34 on the pour spout 20. Thus, the body member 28 is incapable of movement such as is required to move the top 26 above the plug 23 until sufficient force is applied to the top cap 25 to break away the frangible elements 29 so that the top cap 25 can move to the position illustrated in Figure 1. The flanges 31 on the body member 28 cannot move above the flange 33 on the pour spout 20 so that the top cap 25 cannot be removed therefrom. The upstanding stops 29A prevent compression and premature breakage of the frangible elements 29 prior to intended use.

Referring to Figures 1, 2, 3 and 6, the tamper indicating ring 15 has a plurality of circumferentially-spaced, elevated areas 35 each positioned between the respective frangible elements 14. The elevated areas 35 extend from the tamper indicating ring 15 in spaced relation to the lower edge of the flange 13 of the bottle cap 10 and provide selective support of the tamper indicating ring 15 to resist vertical movement imparted by the deflection of the tamper indicating ring 15 during insertion on the bottle neck 18 protecting the frangible elements 14 during assembly.

The elevated areas 35 also serve to protect the frangible elements 14 during the moulding process.

The flange 13 has an inwardly extending helical thread 36 extending about a portion of the interior annular surface 13A and terminating adjacent the top perimeter edge of the annular depending flange 13 at 13B. The thread 36 is registerable with a helical thread 37 extending outwardly from the neck portion 18 (Figure 7). The relative positioning of the thread 36 and the projections 16 on the ring 15 can be seen to be in a circumferentially-spaced overlapping relationship imparting offsetting points of engagement with the respective registering counterparts of the locking annular flange 17 on the bottle neck 18.

A first annular depending sealing flange 38 extends downwardly from the closure top portion 12 in spaced relation to the depending annular skirt 13. A second sealing flange extends angularly inwardly from said top portion 12 adjacent said first sealing flange 38 to define a multiple sealing configuration against the neck portion 18 of the bottle during use.

Figure 6 shows the push-pull closure 10 in assembled condition and illustrates an outside rib surface 40 on the depending annular flange 13.

To remove the push-pull closure cap 10 from the bottle neck 18, a counter-clockwise rotation of the cap 10 is required, which will accordingly engage the respective registering threads 36 and 37 moving the push-pull closure 10 upwardly, breaking the frangible elements 14 connecting the tamper indicating ring 16 to the cap's depending annular flange 13, leaving the tamper indicating ring 16 on the neck portion 18 below the locking flange 17.

## Claims

1. A tamper indicating resealable closure (10) for a container, the closure having a dual tamper indicating means, including a first tamper indicating ring (15) on the closure which lies, in use, adjacent a neck (18) portion of the bottle and a second tamper indicating ring (30) on a push-pull, resealable pour spout means including a pour spout (20) with an opening (22) therein which is partially closed by a top cap (25) having an opening (27) therein, and there being a plug (23), supported by means (24), the plug (23) being in spaced relationship from said pour spout opening (22) to close said top cap opening (27) when said pour spout (20) is pushed to its closed position.

2. A closure according to claim 1 and being of a resilient moulded plastics material.

3. A closure according to claim 1 or 2, wherein said first tamper indicating ring (15) is on an annular depending flange (13) on a bottle top portion (12) and includes a plurality of circumferentially spaced frangible elements (14), said first tamper indicating ring (15) having a plurality of circumferentially-spaced, elevated areas (35) thereon extending axially towards said depending flange (13), the elevated areas (35) defining regions of decreased ring spacing from said depending flange (13) therebetween, and there being means (16) on said first tamper indicating ring (15) for registration with an annular locking flange (17) on the container neck portion (18).

4. A closure according to claim 1, 2 or 3 and comprising an internal pour spout (11) on a secondary top portion (21) communicating with an opening (22) in said secondary top portion (21), said second tamper indicating ring (30) having a plurality of frangible elements (29) integrally connected to said top cap (25) in said first position, there being a plurality of upstanding stops (29A) on said second tamper indicating ring (30) between said frangible elements (29), a flange (34) on said pour spout retaining said second tamper indicating ring (30) in said first position when said top cap (25) is moved away from said first position to a second position locating said opening (22) in said top cap (25) in spaced relation to said plug (23), said flange (34) on said pour spout having a tapered top portion (34A), and there being means for spacing said top cap (25) in relation to said pour spout (20) and a helical thread (36) extending inwardly about the annular depending flange (13).

5. A closure according to claim 3 or claims 3 and 4, wherein said means (16) on said first tamper indicating ring (15) for registration with the container comprises a plurality of circumferentially-spaced, radially inwardly extending arcuate projections (16) on said first tamper indicating ring (15).

6. A closure according to claim 4 or claims 4 and 5, wherein said means (24) for supporting said plug (23) comprises circumferentially-spaced legs (24) extending from said secondary top portion (21).

7. A closure according to claim 3 or claim 4, 5 or 6 as appendant to claim 3, wherein said elevated areas (35) each have a lesser axial extent than each of said frangible elements (14), which lie adjacent.

8. A closure according to claim 4, or claim 5, 6 or 7 as appendant to claim 4, wherein said means for spacing said top cap (25) in relation to said pour spout (20) comprises a pair of inturned annular flanges (31) on said top cap in spaced relation to said second tamper indicating ring (30).

9. A closure according to claim 4, or any one of claims 5 to 8 as appendant to claim 4 and comprising means for retaining said top cap (25) on said pour spout (20) in the form of an out-turned annular flange (33) on said pour spout in spaced relation to said flange (34) retaining said second tamper indicating ring (30).

10. A resilient moulded plastic resealable tamper indicating closure (10) for a bottle having a neck (18) surrounding an opening, said neck having a spiral thread (37) extending outwardly of said neck; said resealabale closure comprising a top portion (12), an annular depending flange (13) on said top portion, a plurality of circumferentially-spaced frangible elements (14) on said depending flange, a thin flexible annular band (15) on the outer ends of said frangible element in spaced vertical relation thereto, said flexible annular band (15) having a plurality of circumferentially-spaced elevated bridge portions (35) thereon extending axially towards said depending flange, the elevated bridge portions (35) defining areas of decreased band spacing from said depending flange therebetween, means (16) on said annular band registerable with an annular locking flange (17) on a container's neck (18) portion, an internal pour spout (11) on said top portion (21) communicating with an opening in said top portion (21), said pour spout (11) having an apertured secondary top thereon, and means for positioning a plug in spaced relation to said secondary top portion (26) and said aperture, a top cap (25) movably positioned on said pouring spout and having an opening registerable with said plug (23) defining a closure when said top cap (25) is in a first position, a band (30) having a plurality of frangible elements (29) integrally connected to said top cap (25) in said first position, a plurality of upstanding stops (29A) on said band between said frangible elements (29), a flange (34) on said pour spout retaining said band in said first position when said top cap is moved away from said first position to a second position locating said opening in said top cap (25) in spaced relation to said plug (23), said flange (34) on said pour spout having a tapered top (34A) portion, means for spacing said top cap (25) in relation to said pour spout and means for retaining said top cap on said pour spout in said second position, a spiral thread extending inwardly about the annular depending flange.

11. A container incorporating a tamper indicating, resealable closure according to any one of the preceding claims.
